# EUROPÄISCHE PATENTSCHRIFT

(11) **EP 2 555 934 B1**
(45) Veröffentlichungstag und Bekanntmachung des Hinweises auf die Patenterteilung: **22.01.2014**
(21) Anmeldenummer: 11713284.5
(22) Anmeldetag: 08.04.2011
(51) Int. Cl.: B60K 1/04

(54) **BEFESTIGUNGSVORRICHTUNG**
FASTENING DEVICE
DISPOSITIF DE FIXATION

(30) Priorität: 09.04.2010 US 322289 P; 08.04.2010 US 321936 P
(43) Veröffentlichungstag der Anmeldung: 13.02.2013
(73) Patentinhaber: Magna Steyr Fahrzeugtechnik AG & Co. KG, 8041 Graz (AT)
(72) Erfinder: AUER, Thomas, A-9363 Metnitz (AT); RODLER, Martin, A-8160 Krottendorf (AT)
(74) Vertreter: Rausch, Gabriele
(86) Internationale Anmeldenummer: PCT/EP2011/055546
(87) Internationale Veröffentlichungsnummer: WO 2011/124701

(56) Entgegenhaltungen:
- DE-A1- 4 206 360
- DE-U1-202008 012 144

## Beschreibung

Die vorliegende Erfindung betrifft eine Befestigungsvorrichtung zum lösbaren Befestigen eines elektrischen Energiespeichers an einer Tragstruktur eines Kraftfahrzeugs, insbesondere eines Elektrofahrzeugs oder Hybridfahrzeugs.

Elektrofahrzeuge oder Hybridfahrzeuge weisen einen elektrischen Antriebsmotor auf, der ein Drehmoment auf die Fahrzeugräder überträgt. Die Energie zum Betrieb des elektrischen Antriebsmotors wird dem Energiespeicher entnommen, bei welchem es sich insbesondere um eine wiederaufladbare Batterie, d.h. einen Akkumulator handeln kann. Üblicherweise umfasst eine derartige Batterie eine Anordnung von galvanischen Zellen, welche in einem Gehäuse untergebracht sind. Die Batterie kann beispielsweise am Tragrahmen des Kraftfahrzeugs angeschraubt sein.

Wenn an dem Fahrzeug ein Batteriewechsel vorzunehmen ist, muss die Verschraubung zwischen der Batterie und dem Fahrzeug gelöst und nach Entnahme der bisherigen Batterie eine Ersatzbatterie angeschraubt werden. Aufgrund des Gewindeverschleißes kann sich die Zuverlässigkeit der Schraubverbindung insbesondere bei häufigen Auswechselvorgängen verschlechtern. Weiterhin erfordert eine Verschraubung mit sicherheitskritischem Charakter einen relativ hohen Montageaufwand, z.B. in Form einer besonders ausführlichen Dokumentation.

Aus der DE 42 06 360 A1 ist ein gattungsgemäßen Befestigungsvorrichtung bekannt.

Es ist eine Aufgabe der Erfindung, das lösbare Befestigen eines Energiespeichers am Tragrahmen eines Kraftfahrzeugs einfacherer und sicherer zu gestalten.

Die Aufgabe wird durch eine Befestigungsvorrichtung mit den Merkmalen des Anspruchs 1 gelöst.

Erfindungsgemäß umfasst eine Befestigungsvorrichtung wenigstens einen Einsteckbolzen und eine Aufnahmeeinheit für den Einsteckbolzen, die an der Tragstruktur und an dem Energiespeicher vorgesehen sind oder umgekehrt, wobei der Einsteckbolzen einen Haltevorsprung umfasst, wobei die Aufnahmeeinheit einen Käfig und ein in dem Käfig gelagertes Verriegelungselement umfasst, wobei der Käfig eine Einstecköffnung umfasst, in die der Einsteckbolzen entlang einer Einsteckrichtung einführbar ist, und wobei das Verriegelungselement zwischen einer Freigabestellung und einer Sperrstellung beweglich ist, wobei das Verriegelungselement in der Freigabestellung die Einstecköffnung für ein Einführen des Einsteckbolzens freigibt und in der Sperrstellung, wenn der Einsteckbolzen in die Einstecköffnung des Käfigs eingeführt ist, den Haltevorsprung des Einsteckbolzens hintergreift, wobei das Verriegelungselement eine Blockierfläche umfasst, die den Haltevorsprung des Einsteckbolzens hintergreift, wenn der Einsteckbolzen in die Einstecköffnung des Käfigs eingeführt ist und das Verriegelungselement in die Sperrstellung bewegt ist, wobei die Blockierfläche des Verriegelungselements bezüglich einer Normalebene zu der Einsteckrichtung zumindest abschnittsweise geneigt ist.

Der Einsteckbolzen kann als separates Bauteil an der Tragstruktur befestigt oder direkt an dieser angeformt sein. Die Aufnahmeeinheit ist vorzugsweise an einem Gehäuse des Energiespeichers befestigt. Ebenso ist es möglich, dass die Aufnahmeeinheit an der Tragstruktur befestigt ist und der Einsteckbolzen an einem Gehäuse des Energiespeichers befestigt oder angeformt ist. Wenn sich das Verriegelungselement in der Freigabestellung befindet, kann der Energiespeicher an das Fahrzeug herangeführt und unter Einführen des Einsteckbolzens in die Einstecköffnung des Käfigs in der korrekten Position an der Tragstruktur angeordnet werden. Durch anschließendes Bewegen des Verriegelungselements in die Sperrstellung wird eine zuverlässige formschlüssige Verbindung aufgrund des Hintergreifens des Haltevorsprungs des Einsteckbolzens hergestellt. Zum Auswechseln des Energiespeichers muss das Verriegelungselement lediglich in die Freigabestellung bewegt werden, so dass der Einsteckbolzen wieder aus der Aufnahmeeinheit herausgeführt werden kann.

Zum Befestigen eines Energiespeichers am Fahrzeug sind somit nur ein Einsteckvorgang und eine Bewegung eines Verriegelungselements erforderlich, so dass sich eine einfache und schnelle Montage ergibt. Insbesondere kann ein Batteriewechsel auch durch ungeübtes Personal durchgeführt werden. Aufgrund des formschlüssigen Eingriffs zwischen dem Einsteckbolzen und der Aufnahmeeinheit ist dennoch ein hohes Maß an Sicherheit gewährleistet. Ein Gewindeverschleiß tritt nicht auf, so dass auch ein häufigeres Auswechseln des Energiespeichers problemlos möglich ist.

Bei der Blockierfläche kann es sich beispielsweise um die Umrandung einer Durchtrittsöffnung handeln. Die Neigung sorgt dafür, dass der Einsteckbolzen beim Bewegen des Verriegelungselements von der Freigabestellung in die Sperrstellung beispielsweise gegen eine Anschlagfläche der Aufnahmeeinheit gespannt wird, vorzugsweise in einer selbsthemmenden Weise. Eine Betätigung des Verriegelungselements bewirkt somit nicht nur eine Verriegelung des Energiespeichers an der Tragstruktur, sondern auch eine Sicherung gegen unerwünschtes Wackeln.

Weiterbildungen der Erfindung sind in den abhängigen Ansprüchen, der Beschreibung sowie den beigefügten Zeichnungen angegeben.

Gemäß einer Ausführungsform der Erfindung umfasst der Einsteckbolzen wenigstens eine Zentrierfläche, die schräg zu der Einführrichtung des Einsteckbolzens ausgerichtet ist, wobei der Käfig der Aufnahmeeinheit wenigstens eine Anschlagfläche umfasst, die schräg zu der Einführrichtung des Einsteckbolzens ausgerichtet ist, wobei die Zentrierfläche des Einsteckbolzens und die Anschlagfläche des Käfigs beim Einführen des Einsteckbolzens in die Einstecköffnung derart zusammenwirken, dass der Einsteckbolzen und der Käfig in wenigstens einer Richtung senkrecht zu der Einsteckrichtung relativ zueinander zentriert werden. Die Zentrierfläche und die Anschlagfläche dienen somit als Zentrierhilfe. Insbesondere muss vor dem Einführen des Einsteckbolzens keine aufwendige exakte Positionierung des Energiespeichers relativ zu der Tragstruktur erfolgen.

Gemäß einer Ausgestaltung der Erfindung ist die Zentrierfläche des Einsteckbolzens kegelförmig. Der Einsteckbolzen kann somit in unterschiedlichen Richtungen zentriert werden.

Die Anschlagfläche des Käfigs kann kegelförmig oder eben sein oder der Käfig kann zwei ebene Anschlagflächen umfassen, die relativ zueinander geneigt sind. Insbesondere kann die Zentrierfläche des Einsteckbolzens kegelförmig sein und die Anschlagfläche des Käfigs kann ebenfalls kegelförmig sein. In diesem Fall ist eine Zentrierung in beliebiger Richtung senkrecht zu der Einführrichtung möglich. Vorzugsweise sind bei einer derartigen Ausgestaltung die Kegelflächen gleichartig geformt, so dass sich nach dem Einführen des Einsteckbolzens in die Aufnahmeeinheit ein flächiger Anschlag mit hoher Festigkeit ergibt. Bei einer Ausgestaltung mit zwei ebenen Anschlagflächen besteht in einer Richtung ein Bewegungsfreiheitsgrad zwischen dem Einsteckbolzen und der Aufnahmeeinheit, welcher zum Ausgleichen von Toleranzen hilfreich ist.

An der Zentrierfläche des Einsteckbolzens oder an der Anschlagfläche des Käfigs kann ein elastisch verformbares Dämpfungselement vorgesehen sein. Ein derartiges Dämpfungselement kann unerwünschte Geräusche und Schwingungen verringern oder vermeiden.

Die Einstecköffnung des Käfigs kann ein Langloch sein. Ein Langloch als Einstecköffnung ist insbesondere dann sinnvoll, wenn an dem Käfig zwei ebene, relativ zueinander geneigte Anschlagflächen vorgesehen sind, wobei die Längsrichtung des Langlochs parallel zu den zwei ebenen Anschlagflächen verläuft. Der Bewegungsfreiheitsgrad bleibt dann erhalten, da sich der Einsteckbolzen in dem Langloch in der entsprechenden Längsrichtung des Langlochs bewegen kann.

Das Verriegelungselement definiert vorzugsweise eine Durchtrittsöffnung mit variabler Breite. Durch Bewegen des Verriegelungselements in dem Käfig kann die Breite der Durchtrittsöffnung verringert werden, wodurch sich eine Umrandung der Durchtrittsöffnung immer mehr dem Bolzen nähert und schließlich dessen Haltevorsprung hintergreift. D.h. die Umrandung der Durchtrittsöffnung definiert eine Blockierfläche, welche beim Bewegen des Verriegelungselements in einen formschlüssigen Eingriff mit dem Haltevorsprung gerät.

Das Verriegelungselement kann zwischen der Freigabestellung und der Sperrstellung um eine Rotationsachse verdrehbar sein. Es ergibt sich dadurch ein besonders einfaches Betätigen des Verriegelungselements zum Befestigen oder Lösen der Verbindung. Gemäß einer Ausgestaltung der Erfindung bildet die Blockierfläche des Verriegelungselements eine Kurvenbahn, insbesondere zwei abschnittsweise konzentrische Kurvenbahnen. Alternativ kann das Verriegelungselement auch geradlinig versetzbar sein.

Gemäß einer weiteren Ausführungsform der Erfindung ist das Verriegelungselement derart mit Spiel in dem Käfig gelagert, dass das Verriegelungselement in einer quer zu der Einsteckrichtung des Einsteckbolzens verlaufenden Ebene relativ zu dem Käfig zweidimensional beweglich ist. Eine derartige Lagerung kann zur Kompensation von Toleranzen herangezogen werden. Die vorstehend genannte Rotationsachse eines verdrehbaren Verriegelungselements wird hierdurch ebenfalls zweidimensional versetzt.

Die Aufnahmeeinheit kann eine Sicherungseinrichtung umfassen, mittels derer das Verriegelungselement in der Freigabestellung und/oder in der Sperrstellung sicherbar ist, insbesondere durch einen jeweiligen Rastschluss. Eine derartige Sicherungseinrichtung kann Schutz vor versehentlichem Lösen der Befestigungsvorrichtung bieten.

Weiterhin kann das freie Ende des Einsteckbolzens eine, insbesondere kegelförmige, Einführschräge aufweisen. Eine derartige Einführschräge kann eine zusätzliche Montagehilfe sein. Insbesondere kann mittels der Einführschräge eine grobe Vorpositionierung vor dem eigentlichen Zentriervorgang mittels der Zentrierfläche und der Anschlagfläche durchgeführt werden.

Die Erfindung betrifft ferner ein Befestigungssystem mit mehreren, vorzugsweise zwei, drei oder vier, Befestigungsvorrichtungen der erläuterten

Art, wobei die Befestigungsvorrichtungen vorzugsweise für verschiedene Eckbereiche des Energiespeichers vorgesehen sind. Ein Energiespeicher kann somit allein durch die Befestigungsvorrichtungen sicher an einem Fahrzeug gehalten werden. Vorzugsweise wird der Energiespeicher von unten an dem Fahrzeug befestigt. Zu diesem Zweck kann ein Hohlraum zur Aufnahme des Energiespeichers an der Fahrzeugunterseite vorgesehen sein.

Gemäß einer Ausführungsform eines derartigen Befestigungssystems umfasst der Käfig der Aufnahmeeinheit einer ersten der mehreren Befestigungsvorrichtungen eine kegelförmige Anschlagfläche, die mit einer kegelförmigen Zentrierfläche des Einsteckbolzens der ersten Befestigungsvorrichtung derart zusammenwirkt, dass der Einsteckbolzen und der Käfig in zwei zueinander senkrechten Richtungen innerhalb einer Normalebene zu der Einsteckrichtung relativ zueinander zentriert werden. Der Käfig der Aufnahmeeinheit einer zweiten der mehreren Befestigungsvorrichtungen umfasst wenigstens eine ebene Anschlagfläche, die schräg zu der Einführrichtung des Einsteckbolzens der zweiten Befestigungsvorrichtung ausgerichtet ist und die mit einer kegelförmigen Zentrierfläche oder wenigstens einer ebenen Zentrierfläche des Einsteckbolzens derart zusammenwirkt, dass der Einsteckbolzen und der Käfig in einer ersten Richtung senkrecht zu der Einsteckrichtung relativ zueinander zentriert werden. Die erste Befestigungsvorrichtung bewirkt also eine vollständige Zentrierung des Energiespeichers und der Tragstruktur in der Normalebene, wohingegen bei der zweiten Befestigungsvorrichtung ein Freiheitsgrad in einer Richtung quer zu der Einführrichtung besteht, welcher eine Kompensation von toleranzbedingten Fehlstellungen erlaubt.

Gemäß einer Weiterbildung dieser Ausführungsform umfasst der Käfig der Aufnahmeeinheit einer dritten der mehreren Befestigungsvorrichtungen wenigstens eine ebene Anschlagfläche, die schräg zu der Einführrichtung des Einsteckbolzens der dritten Befestigungsvorrichtung ausgerichtet ist und die mit einer kegelförmigen Zentrierfläche oder wenigstens einer ebenen Zentrierfläche des Einsteckbolzens derart zusammenwirkt, dass der Einsteckbolzen und der Käfig in einer zweiten Richtung senkrecht zu der Einsteckrichtung relativ zueinander zentriert werden, wobei die zweite Richtung senkrecht zu der ersten Richtung steht. Während der Energiespeicher bei dieser Ausführungsform wiederum an der ersten Befestigungsvorrichtung in allen Raumrichtungen festgehalten ist, bestehen bei der zweiten Befestigungsvorrichtung und bei der dritten Befestigungsvorrichtung jeweilige Freiheitsgrade, die einen Ausgleich von Toleranzen ermöglichen. Da die erste Richtung und die zweite Richtung senkrecht zueinander verlaufen, ist die Position des Energiespeichers jedoch nach dem Befestigen vollständig festgelegt.

Wenigstens eine der mehreren Befestigungsvorrichtungen kann eine Aufnahmeeinheit für einen Einsteckbolzen aufweisen, an welcher keine schräg ausgerichtete Anschlagfläche für den Einsteckbolzen vorgesehen ist. Auf diese Weise kann eine Überbestimmtheit vermieden werden.

Gemäß einer alternativen Ausführungsform des genannten Befestigungssystems ist der Käfig der Aufnahmeeinheit einer ersten der mehreren Befestigungsvorrichtungen ohne eine schräg ausgerichtete Anschlagfläche für den Einsteckbolzen ausgebildet und der Käfig der Aufnahmeeinheit einer zweiten der mehreren Befestigungsvorrichtungen umfasst wenigstens eine ebene Anschlagfläche, die schräg zu der Einführrichtung des Einsteckbolzens der zweiten Befestigungsvorrichtung ausgerichtet ist und die mit einer kegelförmigen Zentrierfläche oder wenigstens einer ebenen Zentrierfläche des Einsteckbolzens derart zusammenwirkt, dass der Einsteckbolzen und der Käfig in einer ersten Richtung senkrecht zu der Einsteckrichtung relativ zueinander zentriert werden. Diese Ausführungsform ermöglicht eine größere Toleranz hinsichtlich der Ausrichtung des Energiespeichers relativ zu der Tragstruktur.

Weiterhin kann der Käfig der Aufnahmeeinheit einer dritten der mehreren Befestigungsvorrichtungen wenigstens eine ebene Anschlagfläche umfassen, die schräg zu der Einführrichtung des Einsteckbolzens der dritten Befestigungsvorrichtung ausgerichtet ist und die mit einer kegelförmigen Zentrierfläche oder wenigstens einer ebenen Zentrierfläche des Einsteckbolzens derart zusammenwirkt, dass der Einsteckbolzen und der Käfig in einer zweiten Richtung senkrecht zu der Einsteckrichtung relativ zueinander zentriert werden, wobei die zweite Richtung senkrecht zu der ersten Richtung steht. Die exakte Ausrichtung des Energiespeichers relativ zu der Tragstruktur wird bei dieser Ausführungsform also ausschließlich über die senkrecht zueinander ausgerichteten ebenen Schrägflächen der ersten und der zweiten Befestigungsvorrichtung erzielt.

Vorzugsweise sind zwei Aufnahmeeinheiten mit ebenen Anschlagflächen vorgesehen, die senkrecht zueinander wirksam sind.

Die Erfindung bezieht sich auch auf ein Energiespeichersystem für ein Kraftfahrzeug mit wenigstens einem elektrischen Energiespeicher und mit mehreren Befestigungsvorrichtungen der erläuterten Art, um den Energiespeicher lösbar an einer Tragstruktur des Kraftfahrzeugs zu befestigen.

Die Erfindung wird nachfolgend beispielhaft unter Bezugnahme auf die Zeichnungen beschrieben.
- Fig. 1: zeigt ein Kraftfahrzeug mit einer Tragstruktur und einem mittels eines erfindungsgemäßen Befestigungssystems an der Tragstruktur zu befestigenden Energiespeicher.
- Fig. 2: ist eine perspektivische Darstellung einer erfindungsgemäßen Befestigungsvorrichtung.
- Fig. 3: ist eine Draufsicht auf die Befestigungsvorrichtung gemäß Fig. 2.
- Fig. 4: ist eine perspektivische, teilweise aufgeschnittene Darstellung der Befestigungsvorrichtung gemäß Fig. 2.
- Fig. 5: ist eine seitliche Schnittdarstellung der Befestigungsvorrichtung gemäß Fig. 2.
- Fig. 6: zeigt einen Einsteckbolzen der Befestigungsvorrichtung gemäß Fig. 2 in einer ersten Phase des Einführens in eine zugehörige Aufnahmeeinheit.
- Fig. 7: zeigt den Einsteckbolzen gemäß Fig. 6 in einer zweiten Phase des Einführens.
- Fig. 8: zeigt den Einsteckbolzen in einem voll eingeführten Zustand, wobei sich ein Verriegelungselement der Aufnahmeeinheit in einer Freigabestellung befindet.
- Fig. 9: zeigt die Anordnung gemäß Fig. 8, wobei sich das Verriegelungselement in der Sperrstellung befindet.
- Fig. 10: ist eine perspektivische, teilweise aufgeschnittene Darstellung einer Befestigungsvorrichtung gemäß einer alternativen Ausgestaltung der Erfindung.
- Fig. 11: zeigt eine Draufsicht auf eine erfindungsgemäße Befestigungsvorrichtung, welche eine Sicherungseinrichtung umfasst.
- Fig. 12: zeigt eine Rückansicht der Befestigungsvorrichtung gemäß Fig. 11.
- Fig. 13: zeigt verschiedene Ausführungsformen von erfindungsgemäßen Befestigungsvorrichtungen, welche sich hinsichtlich der Form einer Anschlagfläche der Aufnahmeeinheit und/oder einer Form einer Zentrierfläche des Einsteckbolzens unterscheiden.
- Fig. 14: zeigt die Befestigungsvorrichtungen gemäß Fig. 13 in einem verriegelten Zustand.

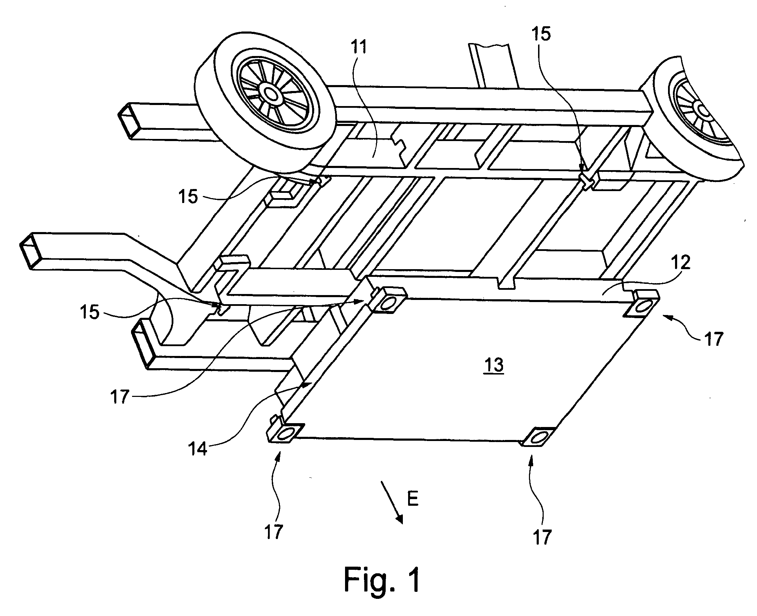

Fig. 1 zeigt vereinfacht Teile eines Elektrofahrzeugs mit einem Tragrahmen 11, an dessen Unterseite ein Energiespeicher 13, z.B. eine wiederaufladbare Batterie, lösbar befestigt werden kann. Die Befestigung erfolgt mittels vier Befestigungsvorrichtungen, welche jeweils einen am Tragrahmen 11 angebrachten Einsteckbolzen 15 und eine am Energiespeicher 13 vorgesehene Aufnahmeeinheit 17 für den Einsteckbolzen 15 umfassen. Wie aus Fig. 1 hervorgeht, weist der Energiespeicher 13 ein im Wesentlichen quaderförmiges Gehäuse 12 mit einem umlaufenden Vorsprung 14 auf, wobei an jeweiligen Eckbereichen des umlaufenden Vorsprungs 14 die Aufnahmeeinheiten 17 vorgesehen sind. Die vier Einsteckbolzen 15 sind derart am Tragrahmen 11 angeordnet, dass sie gleichzeitig entlang einer Einsteckrichtung E in die Aufnahmeeinheiten 17 einführbar sind, wenn der Energiespeicher 13 an den Tragrahmen 11 herangeführt wird.

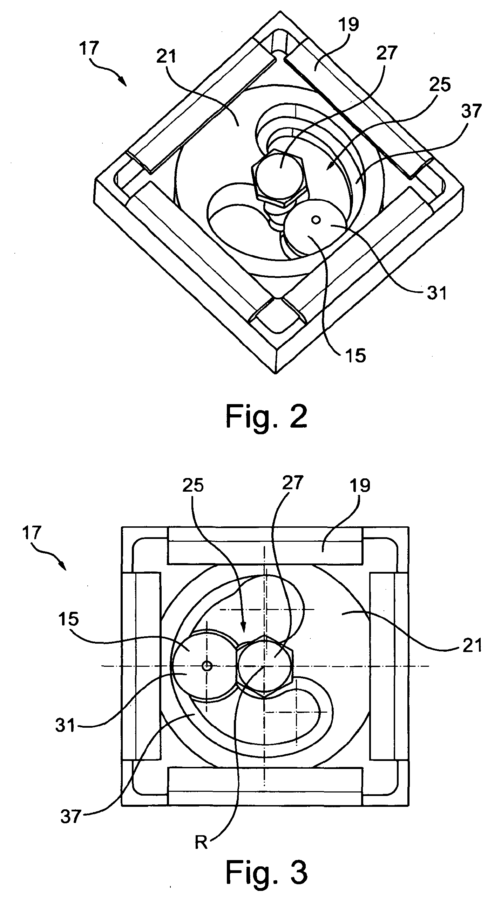

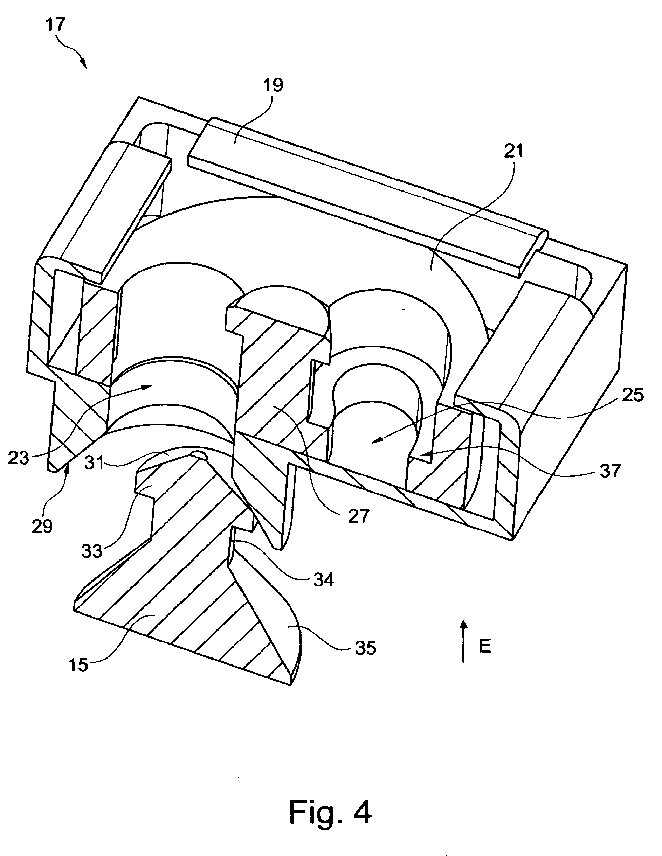

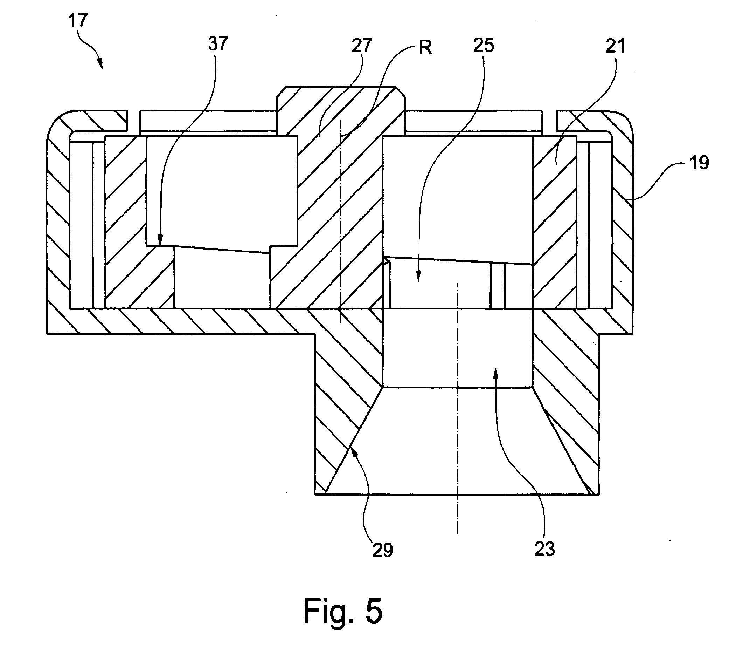

Die Befestigungsvorrichtungen sind mit einem Mechanismus zum lösbaren Verriegeln des Energiespeichers 13 am Tragrahmen 11 ausgestattet, wie nachfolgend unter Bezugnahme auf die Fig. 2 bis 5 erläutert wird. Jede der Aufnahmeeinheiten 17 weist einen Käfig 19 und ein in diesem aufgenommenes Verriegelungselement 21 auf. Das Verriegelungselement 21 ist scheibenförmig und derart beweglich in dem Käfig 19 gelagert, dass es um eine Rotationsachse R drehbar ist und gleichzeitig in einer Ebene senkrecht zu der Rotationsachse R um einen vorbestimmten Betrag verschiebbar ist. Der Käfig 19 definiert gemäß Fig. 4 und 5 eine Einstecköffnung 23 zum Einführen eines Einsteckbolzens 15. Eine kegelförmige Anschlagfläche 29 erstreckt sich um die Einstecköffnung 23 herum. Das Verriegelungselement 21 weist einen zentralen Betätigungsabschnitt 27 mit einem Sechskantkopf auf und definiert eine abschnittsweise konzentrisch zu der Rotationsachse R verlaufende, gekrümmte Durchtrittsöffnung 25, welche eine variable Breite aufweist.

Der Einsteckbolzen 15 weist an seinem freien Ende eine kegelförmige Einführschräge 31 auf, welche in einen Haltevorsprung 33 übergeht. Im Anschluss an einen der Einführschräge 31 und dem Haltevorsprung 33 entgegen der Einsteckrichtung E nachfolgenden zylindrischen Abschnitt 34 ist eine kegelförmige Zentrierfläche 35 vorgesehen, deren Form mit der kegelförmigen Anschlagfläche 29 des Käfigs 19 übereinstimmt.

Wie aus Fig. 5 hervorgeht, ist eine durch die Umrandung der Durchtrittsöffnung 25 gebildete Blockierfläche 37 des Verriegelungselements 21 bezüglich einer Normalebene zu der Einsteckrichtung E geneigt, d.h. die Blockierfläche 37 bildet eine Rampe.

Durch Drehen des Betätigungsabschnitts 27 kann das Verriegelungselement 21 zwischen einer in Fig. 4 dargestellten Freigabestellung und einer Sperrstellung bewegt werden. Wenn sich das Verriegelungselement 21 in der Freigabestellung befindet, fluchtet die Einstecköffnung 23 des Käfigs 19 mit dem breiteren Teil der Durchtrittsöffnung 25 des Verriegelungselements 21, so dass der Einsteckbolzen 15 in die Einstecköffnung 23 einführbar ist. Wenn sich der Einsteckbolzen 15 in der Aufnahmeeinheit 17 befindet und das Verriegelungselement 21 von der Freigabestellung in die Sperrstellung bewegt wird, fluchtet die Einstecköffnung 23 des Käfigs 19 hingegen mit dem schmäleren Teil der Durchtrittsöffnung 25, so dass der Haltevorsprung 33 des Einsteckbolzens 15 von der Blockierfläche 37 hintergriffen wird.

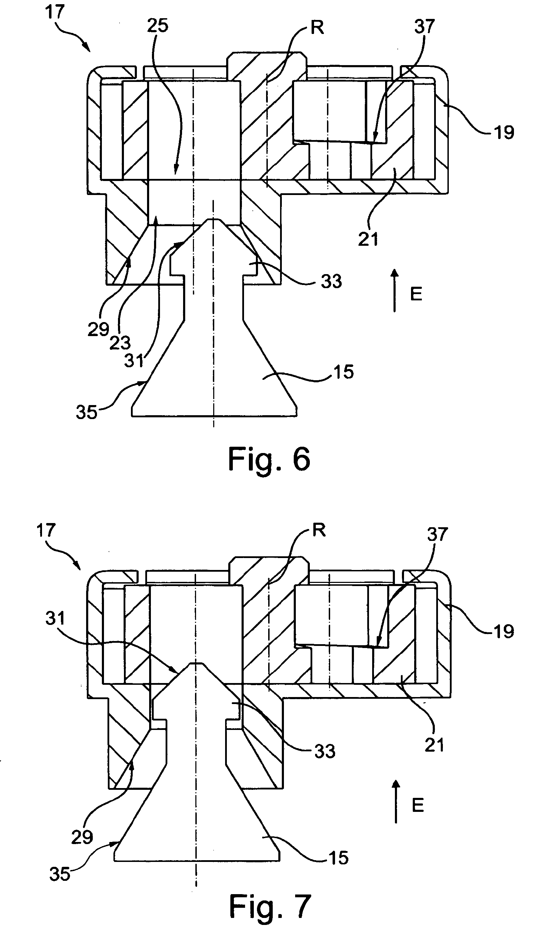

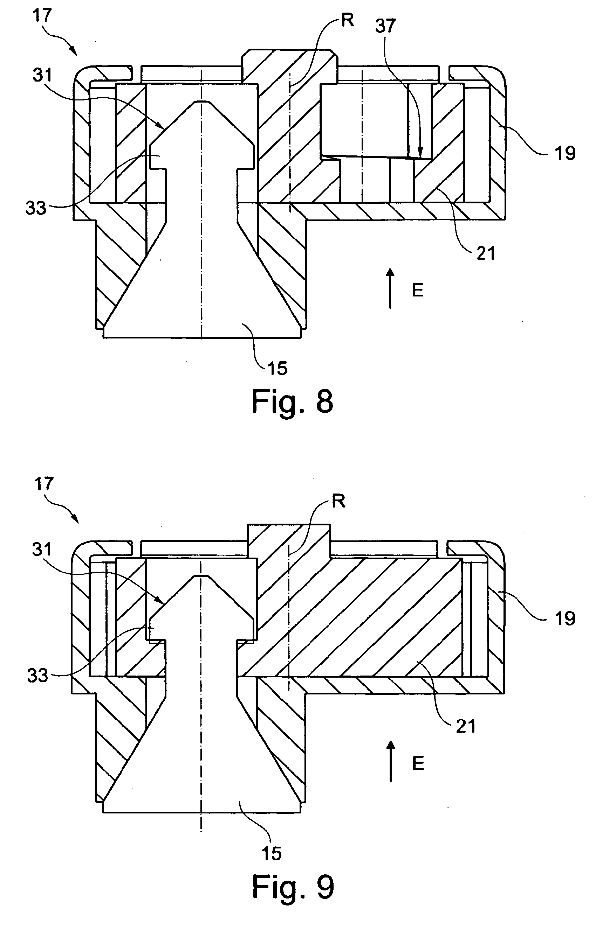

Der Befestigungsvorgang wird nachfolgend unter Bezugnahme auf die Fig. 6 bis 9 näher erläutert. Zunächst wird der Energiespeicher 13 grob vorpositioniert und an den Tragrahmen 11 herangeführt, um die Einsteckbolzen 15 entlang der Einsteckrichtung E in die Aufnahmeeinheiten 17 einzuführen. Sofern einer der Einsteckbolzen 15 und die zugehörige Aufnahmeeinheit 17 nicht exakt zentriert sind, gelangt die Einführschräge 31 des Einsteckbolzens 15 wie in Fig. 6 dargestellt in Kontakt mit der kegelförmigen Anschlagfläche 29 des Käfigs 19 und bewirkt eine korrigierende Ausrichtung des Energiespeichers 13 relativ zum Tragrahmen 11, so dass der Einsteckbolzen 15 durch die Einstecköffnung 23 des Käfigs 19 hindurchgeführt werden kann. Gemäß Fig. 7 und 8 wird der Einsteckbolzen 15 weiter in der Einsteckrichtung E bewegt, bis die Zentrierfläche 35 des Einsteckbolzens 15 an der Anschlagfläche 29 des Käfigs 19 anschlägt. Die kegelförmigen Flächen 29, 35 liegen in diesem Zustand vollflächig aneinander an. Anschließend wird, beispielsweise mittels eines Werkzeugs, das Verriegelungselement 21 am Betätigungsabschnitt 27 um die Rotationsachse R gedreht, wobei sich die Breite der Durchtrittsöffnung 25 am Ort des Einsteckbolzens 15 verringert und der Haltevorsprung 33 des Einsteckbolzens 15 somit von der Blockierfläche 37 hintergriffen wird. Aufgrund der Neigung der Blockierfläche 37 wird die Zentrierfläche 35 des Einsteckbolzens 15 dabei gegen die Anschlagfläche 29 des Käfigs 19 gespannt. Die Durchtrittsöffnung 25 mit der Blockierfläche 37 kann dabei derart gestaltet sein, dass sich ein Selbsthemmungseffekt ergibt. Wenn das Verriegelungselement 21 die in Fig. 9 dargestellte Sperrstellung erreicht hat, ist der Einsteckbolzen 15 somit formschlüssig mit der Aufnahmeeinheit 17 verbunden und gegen Wackeln gesichert.

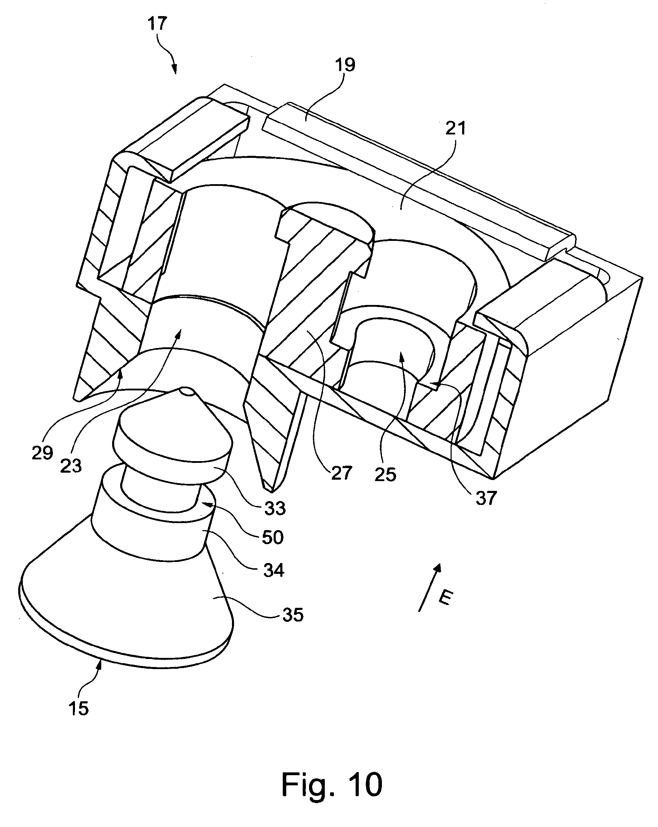

In Fig. 10 ist eine Befestigungsvorrichtung gemäß einer alternativen Ausgestaltung der Erfindung dargestellt, bei welcher der Haltevorsprung 33 des Einsteckbolzens 15 durch eine in dem zylindrischen Abschnitt 34 vorgesehene Nut 50 gebildet ist. D.h. der Haltevorsprung 33 steht hier gegenüber dem zylindrischen Abschnitt 34 nicht vor. Im Übrigen funktioniert die Befestigungsvorrichtung wie die in Fig. 4 bis 9 dargestellte Anordnung, wobei zum Verriegeln die Blockierfläche 37 in die Nut 50 eingreift.

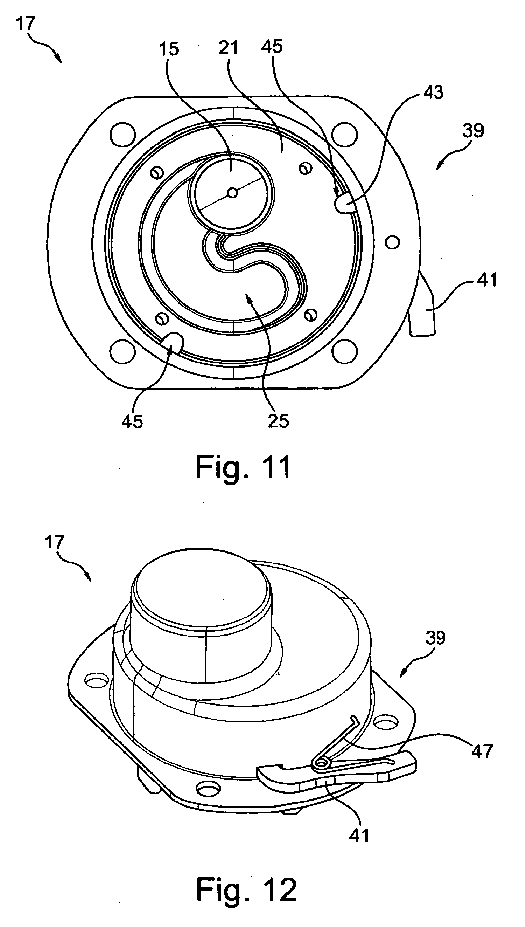

Gemäß einer in Fig. 11 und 12 dargestellten Ausführungsform umfasst die Aufnahmeeinheit 17 eine zusätzliche Sicherungseinrichtung 39 in Form eines schwenkbar an dem Käfig 19 gelagerten Rasthebels 41, an dessen einem Ende ein Rastvorsprung 43 vorgesehen ist, welcher in eine von zwei am Verriegelungselement 21 vorgesehenen Aussparungen 45 eingreift. Die beiden Aussparungen 45 des Verriegelungselements 21 sind derart angeordnet, dass das Verriegelungselement 21 wahlweise in der Freigabestellung oder in der Sperrstellung mittels des Rasthebels 41 mit dem Käfig 19 verrastbar ist. Durch Drücken auf das dem Rastvorsprung 43 entgegengesetzte Ende des Rasthebels 41 kann der Rastvorsprung 43 aus der jeweiligen Aussparung 45 herausbewegt und die Verrastung somit gelöst werden. Durch eine in Fig. 11 erkennbare Feder 47 ist der Rasthebel 41 in die Raststellung vorgespannt.

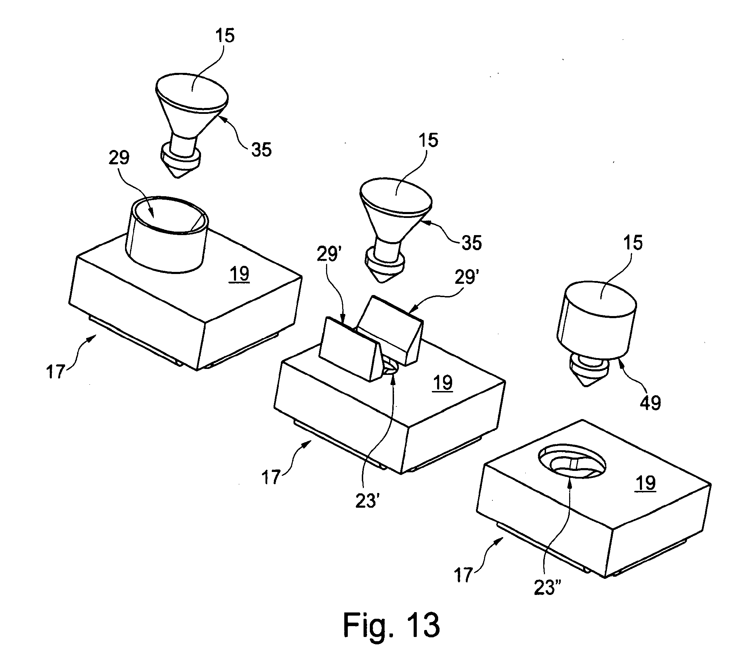

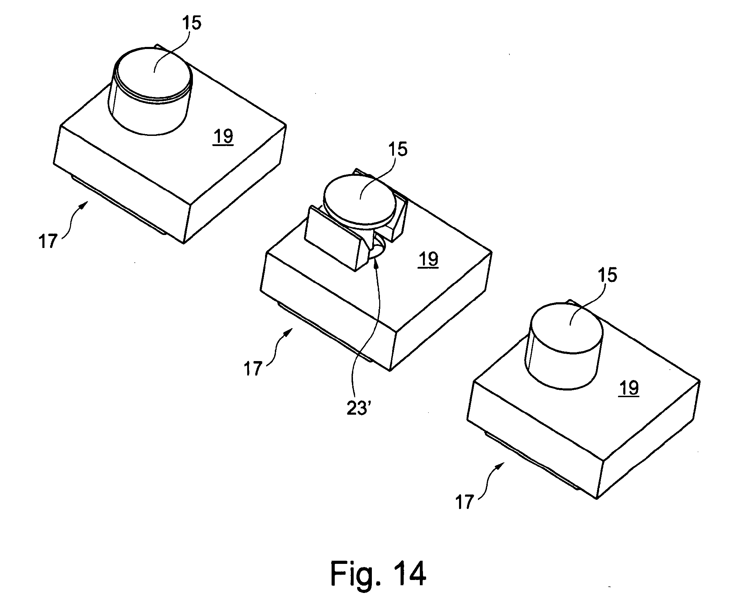

In den Fig. 13 und 14 sind verschiedene Varianten von erfindungsgemäßen Befestigungsvorrichtungen dargestellt. Fig. 13 zeigt dabei die jeweiligen Einsteckbolzen 15 und Aufnahmeeinheiten 17 in voneinander getrenntem Zustand, wohingegen Fig. 14 die Einsteckbolzen 15 in Verbindung mit den zugehörigen Aufnahmeeinheiten 17 zeigen. Die Ausführungsform gemäß dem linken Teil von Fig. 13 und 14 entspricht den vorstehend in Zusammenhang mit den Fig. 1 bis 12 erläuterten Ausführungsformen, bei welchen sowohl die Zentrierfläche 35 des Haltebolzens 15 als auch die Anschlagfläche 29 des Käfigs 19 kegelförmig sind. Bei dieser Verriegelungsvariante wird eine exakte Zentrierung in allen Raumrichtungen bewerkstelligt. Gemäß der im mittleren Teil von Fig. 13 und 14 dargestellten Ausführungsform ist die Zentrierfläche 35 des Einsteckbolzens 15 ebenfalls kegelförmig, die Anschlagfläche 29' des Käfigs 19 weist jedoch zwei ebene Schrägflächen auf, welche relativ zueinander geneigt sind. Bei dieser Ausführungsform kann der Einsteckbolzen 15 auch nach einem Anschlagen an der Anschlagfläche 29' in einer Richtung senkrecht zu der Einsteckrichtung E um einen bestimmten Betrag bewegt werden, d.h. es besteht ein Bewegungs-Freiheitsgrad zum Ausgleich von Toleranzen. Um die Ausgleichsbewegung zu ermöglichen, ist ferner die Einstecköffnung 23' des Käfigs 19 als Langloch ausgebildet. Bei der im rechten Teil von Fig. 13 und 14 dargestellten Ausführungsform weisen weder der Einsteckbolzen 15 noch die Aufnahmeeinheit 17 zentrierende Schrägflächen auf und die Einstecköffnung 23" ist gegenüber den Ausführungsformen gemäß Fig. 1 bis 12 vergrößert, so dass der Einsteckbolzen 15 nach dem vollständigen Einführen bis zu einem ebenen Anschlag 49 in einer Ebene senkrecht zu der Einsteckrichtung E allseitig bewegt werden kann.

Durch eine Kombination der in den Fig. 13 und 14 dargestellten Varianten kann eine exakte Zentrierung des Energiespeichers 13 am zugehörigen Tragrahmen 11 unter Vermeidung einer Überbestimmtheit des Systems erzielt werden. Beispielsweise kann an einem Eckbereich des Energiespeichers 13 eine vollständig zentrierende Befestigungsvorrichtung gemäß dem linken Teil von Fig. 13 und 14 vorgesehen sein, während an den anderen drei Eckbereichen des Energiespeichers 13 nur teilweise zentrierende Befestigungsvorrichtungen vorgesehen sind. Vorzugsweise ist an einem Eckbereich eine Befestigungsvorrichtung mit kegelförmigen Schrägflächen vorgesehen und an zwei weiteren Eckbereichen sind Befestigungsvorrichtungen mit ebenen Schrägflächen vorgesehen, wobei die ebenen Schrägflächen senkrecht zueinander ausgerichtet sind, sodass sich eine Zentrierungsmöglichkeit in voneinander unabhängigen Richtungen ergibt.

Insgesamt ermöglicht die Erfindung ein lösbares Befestigen eines elektrischen Energiespeichers an einem Kraftfahrzeug, wobei ein Wechsel des Energiespeichers schnell und einfach durchgeführt und ohne übermäßige Verschleißerscheinungen beliebig häufig wiederholt werden kann.

### Bezugszeichenliste

- 11: Tragrahmen
- 12: Gehäuse
- 13: Energiespeicher
- 14: umlaufender Vorsprung
- 15: Einsteckbolzen
- 17: Aufnahmeeinheit
- 19: Käfig
- 21: Verriegelungselement
- 23, 23', 23": Einstecköffnung
- 25: Durchtrittsöffnung
- 27: Betätigungsabschnitt
- 29, 29': Anschlagfläche
- 31: Einführschräge
- 33: Haltevorsprung
- 34: zylindrischer Abschnitt
- 35: Zentrierfläche
- 37: Blockierfläche
- 39: Sicherungseinrichtung
- 41: Rasthebel
- 43: Rastvorsprung
- 45: Aussparung
- 47: Feder
- 49: ebener Anschlag
- 50: Nut

- E: Einsteckrichtung
- R: Rotationsachse

## Patentansprüche

1. Befestigungsvorrichtung zum lösbaren Befestigen eines elektrischen Energiespeichers (13) an einer Tragstruktur (11) eines Kraftfahrzeugs, insbesondere eines Hybridfahrzeugs oder Elektrofahrzeugs, mit wenigstens einem Einsteckbolzen (15) und einer Aufnahmeeinheit (17) für den Einsteckbolzen (15), die an der Tragstruktur (11) und an dem Energiespeicher (13) vorgesehen sind oder umgekehrt, wobei der Einsteckbolzen (15) einen Haltevorsprung (33) umfasst, wobei die Aufnahmeeinheit (17) einen Käfig (19) und ein in dem Käfig (19) gelagertes Verriegelungselement (21) umfasst, wobei der Käfig (19) eine Einstecköffnung (23, 23', 23") umfasst, in die der Einsteckbolzen (15) entlang einer Einsteckrichtung (E) einführbar ist, und wobei das Verriegelungselement (21) zwischen einer Freigabestellung und einer Sperrstellung beweglich ist, wobei das Verriegelungselement (21) in der Freigabestellung die Einstecköffnung (23, 23', 23") für ein Einführen des Einsteckbolzens (15) freigibt und in der Sperrstellung, wenn der Einsteckbolzen (15) in die Einstecköffnung (23, 23', 23") des Käfigs (19) eingeführt ist, den Haltevorsprung (33) des Einsteckbolzens (15) hintergreift,
**dadurch gekennzeichnet, dass** das Verriegelungselement (21) eine Blockierfläche (37) umfasst, die den Haltevorsprung (33) des Einsteckbolzens (15) hintergreift, wenn der Einsteckbolzen (15) in die Einstecköffnung (23, 23', 23") des Käfigs (19) eingeführt ist und das Verriegelungselement (21) in die Sperrstellung bewegt ist, wobei die Blockierfläche (37) des Verriegelungselements (21) bezüglich einer Normalebene zu der Einsteckrichtung (E) zumindest abschnittsweise geneigt ist.

2. Befestigungsvorrichtung nach Anspruch 1,
wobei der Einsteckbolzen (15) wenigstens eine Zentrierfläche (35) umfasst, die schräg zu der Einführrichtung (E) des Einsteckbolzens (15) ausgerichtet ist, wobei der Käfig (19) der Aufnahmeeinheit (17) wenigstens eine Anschlagfläche (29, 29') umfasst, die schräg zu der Einführrichtung (E) des Einsteckbolzens (15) ausgerichtet ist, wobei die Zentrierfläche (35) des Einsteckbolzens (15) und die Anschlagfläche (29, 29') des Käfigs (19) beim Einführen des Einsteckbolzens (15) in die Einstecköffnung (23, 23') derart zusammenwirken, dass der Einsteckbolzen (15) und der Käfig (19) in wenigstens einer Richtung senkrecht zu der Einsteckrichtung (E) relativ zueinander zentriert werden.

3. Befestigungsvorrichtung nach Anspruch 2,
wobei die Zentrierfläche (35) des Einsteckbolzens (15) kegelförmig ist.

4. Befestigungsvorrichtung nach Anspruch 2 oder 3,
wobei an der Zentrierfläche (35) des Einsteckbolzens (15) oder an der Anschlagfläche (29, 29') des Käfigs (19) ein elastisch verformbares Dämpfungselement vorgesehen ist.

5. Befestigungsvorrichtung nach zumindest einem der Ansprüche 2 bis 4,
wobei die Anschlagfläche (29, 29') des Käfigs (19) kegelförmig oder eben ist.

6. Befestigungsvorrichtung nach zumindest einem der Ansprüche 2 bis 4,
wobei der Käfig (19) zwei ebene Anschlagflächen (29') umfasst, die relativ zueinander geneigt sind, wobei die Einstecköffnung (23') des Käfigs (19) vorzugsweise ein Langloch ist, das sich parallel zu den zwei ebenen Anschlagflächen (29') erstreckt.

7. Befestigungsvorrichtung nach zumindest einem der vorstehenden Ansprüche,
wobei das Verriegelungselement (21) eine Durchtrittsöffnung (25) mit variabler Breite definiert.

8. Befestigungsvorrichtung nach zumindest einem der vorstehenden Ansprüche,
wobei das Verriegelungselement (21) zwischen der Freigabestellung und der Sperrstellung um eine Rotationsachse (R) verdrehbar ist.

9. Befestigungsvorrichtung nach zumindest einem der vorstehenden Ansprüche,
wobei das Verriegelungselement (21) derart mit Spiel in dem Käfig (19) gelagert ist, dass das Verriegelungselement (21) in einer quer zu der Einsteckrichtung (E) des Einsteckbolzens (15) verlaufenden Ebene relativ zu dem Käfig (19) zweidimensional beweglich ist.

10. Befestigungsvorrichtung nach zumindest einem der vorstehenden Ansprüche,
wobei die Aufnahmeeinheit (17) eine Sicherungseinrichtung (39) umfasst, mittels derer das Verriegelungselement (21) in der Freigabestellung und/oder in der Sperrstellung sicherbar ist, insbesondere durch einen jeweiligen Rastschluss.

11. Befestigungsvorrichtung nach zumindest einem der vorstehenden Ansprüche,
wobei das freie Ende des Einsteckbolzens (15) eine, insbesondere kegelförmige, Einführschräge (31) aufweist.

12. Befestigungssystem mit mehreren, vorzugsweise zwei, drei oder vier, Befestigungsvorrichtungen jeweils nach einem der vorhergehenden Ansprüche, wobei die Befestigungsvorrichtungen vorzugsweise für verschiedene Eckbereiche des Energiespeichers (13) vorgesehen sind.

13. Befestigungssystem nach Anspruch 12,
wobei der Käfig (19) der Aufnahmeeinheit (17) einer ersten der mehreren Befestigungsvorrichtungen eine kegelförmige Anschlagfläche (29) umfasst, die mit einer kegelförmigen Zentrierfläche (35) des Einsteckbolzens (15) der ersten Befestigungsvorrichtung derart zusammenwirkt, dass der Einsteckbolzen (15) und der Käfig (19) in zwei zueinander senkrechten Richtungen innerhalb einer Normalebene zu der Einsteckrichtung (E) relativ zueinander zentriert werden; und
wobei der Käfig (19) der Aufnahmeeinheit (17) einer zweiten der mehreren Befestigungsvorrichtungen wenigstens eine ebene Anschlagfläche (29') umfasst, die schräg zu der Einführrichtung (E) des Einsteckbolzens (15) der zweiten Befestigungsvorrichtung ausgerichtet ist und die mit einer kegelförmigen Zentrierfläche (35) oder wenigstens einer ebenen Zentrierfläche des Einsteckbolzens (15) derart zusammenwirkt, dass der Einsteckbolzen (15) und der Käfig (19) in einer ersten Richtung senkrecht zu der Einsteckrichtung (E) relativ zueinander zentriert werden.

14. Befestigungssystem nach Anspruch 13,
wobei der Käfig (19) der Aufnahmeeinheit (17) einer dritten der mehreren Befestigungsvorrichtungen wenigstens eine ebene Anschlagfläche (29') umfasst, die schräg zu der Einführrichtung (E) des Einsteckbolzens (15) der dritten Befestigungsvorrichtung ausgerichtet ist und die mit einer kegelförmigen Zentrierfläche (35) oder wenigstens einer ebenen Zentrierfläche des Einsteckbolzens (15) derart zusammenwirkt, dass der Einsteckbolzen (15) und der Käfig (19) in einer zweiten Richtung senkrecht zu der Einsteckrichtung (E) relativ zueinander zentriert werden, wobei die zweite Richtung senkrecht zu der zweiten Richtung steht.

15. Befestigungssystem nach zumindest einem der Ansprüche 12 bis 14,
wobei wenigstens eine der mehreren Befestigungsvorrichtungen eine Aufnahmeeinheit (17) für einen Einsteckbolzen (15) aufweist, an welcher keine schräg ausgerichtete Anschlagfläche für den Einsteckbolzen (15) vorgesehen ist.

16. Befestigungssystem nach Anspruch 12,
wobei der Käfig (19) der Aufnahmeeinheit (17) einer ersten der mehreren Befestigungsvorrichtungen ohne eine schräg ausgerichtete Anschlagfläche für den Einsteckbolzen (15) ausgebildet ist; und wobei der Käfig (19) der Aufnahmeeinheit (17) einer zweiten der mehreren Befestigungsvorrichtungen wenigstens eine ebene Anschlagfläche (29') umfasst, die schräg zu der Einführrichtung (E) des Einsteckbolzens (15) der zweiten Befestigungsvorrichtung ausgerichtet ist und die mit einer kegelförmigen Zentrierfläche (35) oder wenigstens einer ebenen Zentrierfläche des Einsteckbolzens (15) derart zusammenwirkt, dass der Einsteckbolzen (15) und der Käfig (19) in einer ersten Richtung senkrecht zu der Einsteckrichtung (E) relativ zueinander zentriert werden.

17. Befestigungssystem nach Anspruch 16,
wobei der Käfig (19) der Aufnahmeeinheit (17) einer dritten der mehreren Befestigungsvorrichtungen wenigstens eine ebene Anschlagfläche (29') umfasst, die schräg zu der Einführrichtung (E) des Einsteckbolzens (15) der dritten Befestigungsvorrichtung ausgerichtet ist und die mit einer kegelförmigen Zentrierfläche (35) oder wenigstens einer ebenen Zentrierfläche des Einsteckbolzens (15) derart zusammenwirkt, dass der Einsteckbolzen (15) und der Käfig (19) in einer zweiten Richtung senkrecht zu der Einsteckrichtung (E) relativ zueinander zentriert werden, wobei die zweite Richtung senkrecht zu der ersten Richtung steht.

## Claims

1. Fastening apparatus for releasably fastening an electric energy store (13) to a supporting structure (11) of a motor vehicle, in particular a hybrid vehicle or electric vehicle, having at least one plug-in pin (15) and a receiving unit (17) for the plug-in pin (15), which are provided on the supporting structure (11) and on the energy store (13) or vice versa, the plug-in pin (15) comprising a holding projection (33), the receiving unit (17) comprising a cage (19) and a locking element (21) which is mounted in the cage (19), the cage (19) comprising an plug-in opening (23, 23', 23"), into which the plug-in pin (15) can be introduced along an plug-in direction (E), and the locking element (21) being movable between a released position and a blocked position, the locking element (21) releasing, in the released position, the plug-in opening (23, 23', 23") for introduction of the plug-in pin (15) and, in the blocked position, engaging behind the holding projection (33) of the plug-in pin (15) when the plug-in pin (15) is introduced into the plug-in opening (23, 23', 23") of the cage (19), **characterized in that** the locking element (21) comprises a blocking face (37) which engages behind the holding projection (33) of the plug-in pin (15) when the plug-in pin (15) is introduced into the plug-in opening (23, 23', 23") of the cage (19) and the locking element (21) is moved into the blocked position, the blocking face (37) of the locking element (21) being inclined at least in sections with regard to a normal plane with respect to the plug-in direction (E).

2. Fastening apparatus according to Claim 1, the plug-in pin (15) comprising at least one centring face (35) which is oriented obliquely with respect to the introduction direction (E) of the plug-in pin (15), the cage (19) of the receiving unit (17) comprising at least one stop face (29, 29') which is oriented obliquely with respect to the introduction direction (E) of the plug-in pin (15), the centring face (35) of the plug-in pin (15) and the stop face (29, 29') of the cage (19) interacting during the introduction of the plug-in pin (15) into the plug-in opening (23, 23') in such a way that the plug-in pin (15) and the cage (19) are centred relative to one another in at least one direction perpendicularly with respect to the plug-in direction (E).

3. Fastening apparatus according to Claim 2, the centring face (35) of the plug-in pin (15) being conical.

4. Fastening apparatus according to Claim 2 or 3, an elastically deformable damping element being provided on the centring face (35) of the plug-in pin (15) or on the stop face (29, 29') of the cage (19).

5. Fastening apparatus according to at least one of Claims 2 to 4, the stop face (29, 29') of the cage (19) being conical or planar.

6. Fastening apparatus according to at least one of Claims 2 to 4, the cage (19) comprising two planar stop faces (29') which are inclined relative to one another, the plug-in opening (23') of the cage (19) preferably being a slot which extends parallel to the two planar stop faces (29').

7. Fastening apparatus according to at least one of the preceding claims, the locking element (21) defining a passage opening (25) with a variable width.

8. Fastening apparatus according to at least one of the preceding claims, it being possible for the locking element (21) to be rotated about a rotational axis (R) between the released position and the blocked position.

9. Fastening apparatus according to at least one of the preceding claims, the locking element (21) being mounted in the cage (19) with play in such a way that the locking element (21) can be moved in two dimensions relative to the cage (19) in a plane which runs transversely with respect to the plug-in direction (E) of the plug-in pin (15).

10. Fastening apparatus according to at least one of the preceding claims, the receiving unit (17) comprising a securing device (39), by means of which the locking element (21) can be secured in the released position and/or in the blocked position, in particular by way of a respective latching connection.

11. Fastening apparatus according to at least one of the preceding claims, the free end of the plug-in pin (15) having an introduction bevel (31) which is, in particular, conical.

12. Fastening system having a plurality of, preferably two, three or four, fastening apparatuses in each case according to one of the preceding claims, the fastening apparatuses preferably being provided for different corner regions of the energy store (13).

13. Fastening system according to Claim 12, the cage (19) of the receiving unit (17) of a first of the plurality of fastening apparatuses comprising a conical stop face (29) which interacts with a conical centring face (35) of the plug-in pin (15) of the first fastening apparatus in such a way that the plug-in pin (15) and the cage (19) are centred relative to one another in two mutually perpendicular directions within a normal plane with respect to the plug-in direction (E); and the cage (19) of the receiving unit (17) of a second of the plurality of fastening apparatuses comprising at least one planar stop face (29') which is oriented obliquely with respect to the introduction direction (E) of the plug-in pin (15) of the second fastening apparatus and which interacts with a conical centring face (35) or at least one planar centring face of the plug-in pin (15) in such a way that the plug-in pin (15) and the cage (19) are centred relative to one another in a first direction perpendicularly with respect to the plug-in direction (E).

14. Fastening system according to Claim 13, the cage (19) of the receiving unit (17) of a third of the plurality of fastening apparatuses comprising at least one planar stop face (29') which is oriented obliquely with respect to the introduction direction (E) of the plug-in pin (15) of the third fastening apparatus and which interacts with a conical centring face (35) or at least one planar centring face of the plug-in pin (15) in such a way that the plug-in pin (15) and the cage (19) are centred relative to one another in a second direction perpendicularly with respect to the plug-in direction (E), the second direction lying perpendicularly with respect to the first direction.

15. Fastening system according to at least one of Claims 12 to 14, at least one of the plurality of fastening apparatuses having a receiving unit (17) for a plug-in pin (15), on which no obliquely oriented stop face for the plug-in pin (15) is provided.

16. Fastening system according to Claim 12, the cage (19) of the receiving unit (17) of a first of the plurality of fastening apparatuses being configured without an obliquely oriented stop face for the plug-in pin (15); and the cage (19) of the receiving unit (17) of a second of the plurality of fastening apparatuses comprising at least one planar stop face (29') which is oriented obliquely with respect to the introduction direction (E) of the plug-in pin (15) of the second fastening apparatus and which interacts with a conical centring face (35) or at least one planar centring face of the plug-in pin (15) in such a way that the plug-in pin (15) and the cage (19) are centred relative to one another in a first direction perpendicularly with respect to the plug-in direction (E).

17. Fastening system according to Claim 16, the cage (19) of the receiving unit (17) of a third of the plurality of fastening apparatuses comprising at least one planar stop face (29') which is oriented obliquely with respect to the introduction direction (E) of the plug-in pin (15) of the third fastening apparatus and which interacts with a conical centring face (35) or at least one planar centring face of the plug-in pin (15) in such a way that the plug-in pin (15) and the cage (19) are centred relative to one another in a second direction perpendicularly with respect to the plug-in direction (E), the second direction lying perpendicularly with respect to the first direction.

## Revendications

1. Dispositif de fixation pour fixer de manière amovible un accumulateur d'énergie électrique (13) sur une structure de support (11) d'un véhicule automobile, en particulier d'un véhicule hybride ou d'un véhicule électrique, comprenant au moins une cheville enfichable (15) et une unité de réception (17) pour la cheville enfichable (15), lesquelles sont prévues sur la structure de support (11) et sur l'accumulateur d'énergie (13) ou inversement, la cheville enfichable (15) comportant une saillie de retenue (33), l'unité de réception (17) comportant une cage (19) et un élément de verrouillage (21) monté dans la cage (19), la cage (19) comportant une ouverture d'enfichage (23, 23', 23'') dans laquelle la cheville enfichable (15) peut être insérée le long d'une direction d'enfichage (E), et l'élément de verrouillage (21) étant mobile entre une position de libération et une position de blocage, l'élément de verrouillage (21) libérant, dans la position de libération, l'ouverture d'enfichage (23, 23', 23'') pour une insertion de la cheville enfichable (15) et, dans la position de blocage, venant en prise par l'arrière avec la saillie de retenue (33) de la cheville enfichable (15) lorsque la cheville enfichable (15) est insérée dans l'ouverture d'enfichage (23, 23', 23") de la cage (19),
**caractérisé en ce que** l'élément de verrouillage (21) comporte une surface de blocage (37) qui vient en prise par l'arrière avec la saillie de retenue (33) de la cheville enfichable (15) lorsque la cheville enfichable (15) est insérée dans l'ouverture d'enfichage (23, 23', 23") de la cage (19) et que l'élément de verrouillage (21) est déplacé dans la position de blocage, la surface de blocage (37) de l'élément de verrouillage (21) étant inclinée au moins en partie par rapport à un plan normal à la direction d'enfichage (E).

2. Dispositif de fixation selon la revendication 1,
la cheville enfichable (15) comportant au moins une surface de centrage (35) qui est orientée de manière oblique par rapport à la direction d'insertion (E) de la cheville enfichable (15), la cage (19) de l'unité de réception (17) comportant au moins une surface de butée (29, 29') qui est orientée de manière oblique par rapport à la direction d'insertion (E) de la cheville enfichable (15), la surface de centrage (35) de la cheville enfichable (15) et la surface de butée (29, 29') de la cage (19) coopérant lors de l'insertion de la cheville enfichable (15) dans l'ouverture d'enfichage (23, 23') de telle sorte que la cheville enfichable (15) et la cage (19) soient centrées l'une par rapport à l'autre dans au moins une direction perpendiculaire à la direction d'enfichage (E).

3. Dispositif de fixation selon la revendication 2,
dans lequel la surface de centrage (35) de la cheville enfichable (15) est conique.

4. Dispositif de fixation selon la revendication 2 ou 3,
dans lequel un élément d'amortissement déformable élastiquement est prévu sur la surface de centrage (35) de la cheville enfichable (15) ou sur la surface de butée (29, 29') de la cage (19).

5. Dispositif de fixation selon au moins l'une quelconque des revendications 2 à 4,
dans lequel la surface de butée (29, 29') de la cage (19) est conique ou plane.

6. Dispositif de fixation selon au moins l'une quelconque des revendications 2 à 4,
la cage (19) comportant deux surfaces de butée planes (29') qui sont inclinées l'une par rapport à l'autre, l'ouverture d'enfichage (23') de la cage (19) étant de préférence un trou oblong qui s'étend parallèlement aux deux surfaces de butée planes (29').

7. Dispositif de fixation selon au moins l'une quelconque des revendications précédentes,
dans lequel l'élément de verrouillage (21) définit une ouverture de passage (25) présentant une largeur variable.

8. Dispositif de fixation selon au moins l'une quelconque des revendications précédentes,
dans lequel l'élément de verrouillage (21) peut être tourné autour d'un axe de rotation (R) entre la position de libération et la position de blocage.

9. Dispositif de fixation selon au moins l'une quelconque des revendications précédentes,
dans lequel l'élément de verrouillage (21) est monté avec jeu dans la cage (19) de telle sorte que l'élément de verrouillage (21) soit mobile de manière bidimensionnelle par rapport à la cage (19) dans un plan s'étendant transversalement à la direction d'enfichage (E) de la cheville enfichable (15).

10. Dispositif de fixation selon au moins l'une quelconque des revendications précédentes,
dans lequel l'unité de réception (17) comporte un dispositif d'immobilisation (39) au moyen duquel l'élément de verrouillage (21) peut être immobilisé dans la position de libération et/ou dans la position de blocage, en particulier par un engagement par encliquetage respectif.

11. Dispositif de fixation selon au moins l'une quelconque des revendications précédentes,
dans lequel l'extrémité libre de la cheville enfichable (15) comprend un biseau d'insertion (31) en particulier conique.

12. Système de fixation comprenant plusieurs, de préférence deux, trois ou quatre, dispositifs de fixation respectivement selon l'une quelconque des revendications précédentes, dans lequel les dispositifs de fixation sont prévus de préférence pour différentes régions de coin de l'accumulateur d'énergie (13).

13. Système de fixation selon la revendication 12,
dans lequel la cage (19) de l'unité de réception (17) d'un premier dispositif de fixation parmi les plusieurs dispositifs de fixation comporte une surface de butée conique (29) qui coopère avec une surface de centrage conique (35) de la cheville enfichable (15) du premier dispositif de fixation de telle sorte que la cheville enfichable (15) et la cage (19) soient centrées l'une par rapport à l'autre dans deux directions perpendiculaires l'une à l'autre à l'intérieur d'un plan normal à la direction d'enfichage (E) ; et
dans lequel la cage (19) de l'unité de réception (17) d'un deuxième dispositif de fixation parmi les plusieurs dispositifs de fixation comporte au moins une surface de butée plane (29') qui est orientée de manière oblique par rapport à la direction d'insertion (E) de la cheville enfichable (15) du deuxième dispositif de fixation et qui coopère avec une surface de centrage conique (35) ou au moins une surface de centrage plane de la cheville enfichable (15) de telle sorte que la cheville enfichable (15) et la cage (19) soient centrées l'une par rapport à l'autre dans une première direction perpendiculaire à la direction d'enfichage (E).

14. Système de fixation selon la revendication 13,
dans lequel la cage (19) de l'unité de réception (17) d'un troisième dispositif de fixation parmi les plusieurs dispositifs de fixation comporte au moins une surface de butée plane (29') qui est orientée de manière oblique par rapport à la direction d'insertion (E) de la cheville enfichable (15) du troisième dispositif de fixation et qui coopère avec une surface de centrage conique (35) ou au moins une surface de centrage plane de la cheville enfichable (15) de telle sorte que la cheville enfichable (15) et la cage (19) soient centrées l'une par rapport à l'autre dans une deuxième direction perpendiculaire à la direction d'enfichage (E), la deuxième direction étant perpendiculaire à la première direction.

15. Système de fixation selon au moins l'une quelconque des revendications 12 à 14,
dans lequel au moins l'un des plusieurs dispositifs de fixation comprend une unité de réception (17) pour une cheville enfichable (15), sur laquelle aucune surface de butée orientée de manière oblique pour la cheville enfichable (15) n'est prévue.

16. Système de fixation selon la revendication 12, dans lequel la cage (19) de l'unité de réception (17) d'un premier dispositif de fixation parmi les plusieurs dispositifs de fixation est réalisée sans surface de butée orientée de manière oblique pour la cheville enfichable (15) ; et
dans lequel la cage (19) de l'unité de réception (17) d'un deuxième dispositif de fixation parmi les plusieurs dispositifs de fixation comporte au moins une surface de butée plane (29') qui est orientée de manière oblique par rapport à la direction d'insertion (E) de la cheville enfichable (15) du deuxième dispositif de fixation et qui coopère avec une surface de centrage conique (35) ou au moins une surface de centrage plane de la cheville enfichable (15) de telle sorte que la cheville enfichable (15) et la cage (19) soient centrées l'une par rapport à l'autre dans une première direction perpendiculaire à la direction d'enfichage (E).

17. Système de fixation selon la revendication 16, dans lequel la cage (19) de l'unité de réception (17) d'un troisième dispositif de fixation parmi les plusieurs dispositifs de fixation comporte au moins une surface de butée plane (29') qui est orientée de manière oblique par rapport à la direction d'insertion (E) de la cheville enfichable (15) du troisième dispositif de fixation et qui coopère avec une surface de centrage conique (35) ou au moins une surface de centrage plane de la cheville enfichable (15) de telle sorte que la cheville enfichable (15) et la cage (19) soient centrées l'une par rapport à l'autre dans une deuxième direction perpendiculaire à la direction d'enfichage (E), la deuxième direction étant perpendiculaire à la première direction.
